# EUROPEAN PATENT APPLICATION

(11) **EP 4 850 795 A1**
(43) Date of publication of application: **09.12.2026**
(21) Application number: 25305794.7
(22) Date of filing: 02.06.2025
(51) Int. Cl.: B01D 67/00, B01D 71/34

(54) **METHOD FOR PREPARING FLUOROPOLYMER NANOFILTRATION MEMBRANE**

(71) Applicant: ARKEMA France, 92800 Puteaux (FR)
(72) Inventor: FANG, Mingyuan, CHANGSHU, 215522 (CN); BOUTTI, Salima, 92800 PUTEAUX (FR); PENG, Hao, 128825 SINGAPORE (SG); WANG, Rong, 128037 SINGAPORE (SG)
(74) Representative: Bandpay & Greuter

(57) **Abstract**

The present invention relates to A method of making a porous membrane, comprising :
- providing:
• a first solution comprising at least one fluoropolymer A, a solvent A and a co-solvent B;
• a second solution comprising at least one fluoropolymer B, at least one pore-forming agent, a solvent C, and a non-solvent A;

- co-casting the first and the second solutions onto a substrate to form a dual-layer film, wherein the first solution forms an upper layer of the film and the second solution forms a bottom layer of the film;
- immersing the film in a bath of a non-solvent B to form the porous membrane.

## Description

### Technical field

The present invention relates to a method of making a porous membrane as described in detail below comprising providing a first solution comprising at least one fluoropolymer A, a solvent A and a co-solvent B and providing a second solution comprising at least one fluoropolymer B, at least one pore-forming agent, a solvent C and a non-solvent C; casting the solutions to form a dual-layer film and immersing the film in a non-solvent bath B. The invention also concerns a porous membrane obtainable by the method described above as well as the use of the porous membrane described above for water treatment.

### Technical background

The water field is confronted with a multitude of challenges. One of the major problems is the contamination of water sources with harmful pollutants including viruses, microplastics, heavy metals, and toxic chemicals, which can result in severe health complications, and long-term illnesses. The problem is exacerbated by industrial waste, agricultural runoff, and improper waste disposal, polluting both freshwater and groundwater. In addition, a significant proportion of wastewater treatment facilities are not equipped to handle the aforementioned pollutants.

Consequently, in a multitude of regions, particularly within developing countries, access to clean and safe drinking water remains a significant challenge, contributing to waterborne diseases and high mortality rates. Moreover, the increasing demand for water due to population growth and climate change-induced water scarcity further stresses available water resources.

Water purification by membrane filtration technologies is crucial in addressing these challenges. These technologies use low levels of energy, facilitate the removal of contaminants, enhance water quality, and ensure the safety and reliability of water sources. Therefore, the development of these technologies is of importance, in promoting public health and guarantee a sustainable water supply.

Nanofiltration (NF) is a membrane-based filtration process that lies between ultrafiltration and reverse osmosis, having pore sizes ranging from 1 to 10 nanometers, to organic molecules, and larger particles from water, while allowing salts to pass through. This makes nanofiltration an optimal method, offering a good compromise between membrane selectivity and energy consumption, for purifying water in various applications, including drinking water treatment, wastewater recycling, and food processing industries.

Among several materials used for making NF membranes, fluoropolymers are commonly used materials for water treatment related applications. Fluoropolymers and, more specifically polyvinylidene fluorides (PVDF), have excellent mechanical strength, high thermal and chemical resistance while withstanding halogen regeneration (e.g. chlorine).

However, fluoropolymers including PVDF are hydrophobic materials, leading to poor water permeability and risking to increase membrane fouling.

Over the last decades, several methods such as a non-solvent induced phase separation method (NIPS) or a thermally induced phase separation method (TIPS) have been developed to prepare NF-fluoropolymer based membranes. The NIPS method involves dissolving the polymer in a suitable solvent to form a solution. This solution is then cast onto a flat surface to form a thin film. Once the film is cast, it is exposed to a non-solvent that causes the polymer to phase separate, forming a porous structure. The non-solvent induces a rapid exchange of solvent with non-solvent, leading to the solidification of the polymer and the formation of a porous membrane. On the other hand, the TIPS method is similar to the NIPS method but involves a phase separation induced by cooling the film after casting. It causes the phase separation of the polymer and separation from the solvent to form a porous structure.

The preparation of double-layer membranes using the NIPS/TIPS methods was considered in order to obtain more selective porous membranes with better mechanical properties.

Document CN108126528 relates to a method for preparing a double hollow fiber nanofiltration membrane.

Document EP2813278 concerns a method for making a multilayer porous membrane from a multilayered liquid sheet produced by co-casting and to the membrane so formed .

However, these membranes prepared by NIPS methods suffer from low permeances, uncontrolled pore shape, and/or a wide pore size distribution, which is not precise enough to be used as NF-membranes.

Within this context, there is a need to provide methods for making fluoropolymer based porous membranes that are both highly permeable (> 1.5 LMH.bar⁻¹) and selective (rejection of targeted pollutants higher than 80% and a molecular weight cut-off lower than 3000 Da).

### Summary of the invention

It is therefore the object of this invention to provide a method of making a porous membrane, comprising :
- providing :
   - a first solution comprising at least one fluoropolymer A, a solvent A and a co-solvent B;
   - a second solution comprising at least one fluoropolymer B, at least one pore-forming agent, a solvent C, and a non-solvent A;
- co-casting the first and the second solutions onto a substrate to form a dual-layer film, wherein the first solution forms an upper layer of the film and the second solution forms a bottom layer of the film;
- immersing the film in a bath of a non-solvent B to form the porous membrane.

According to some embodiments, the mass concentration of the at least one polymer A in the first solution is higher than the mass concentration of the at least one polymer B in the second solution.

According to some embodiments, the mass concentration of the at least one fluoropolymer A in the first solution is from 5 to 40% by weight, preferably from 10 to 30% by weight, even more preferably from 15 to 22% by weight.

According to some embodiments, the mass concentration of the at least one fluoropolymer B in the second solution is from 4 to 39% by weight, preferably from 9 to 29% by weight, even more preferably from 14 to 21% by weight.

According to some embodiments, the at least one fluoropolymer A and the at least one fluoropolymer B are the same fluoropolymer.

According to some embodiments, the at least one fluoropolymer A and the at least one fluoropolymer B are individually selected from a polyvinylidene fluoride homopolymer or a polyvinylidene fluoride copolymer comprising vinylidene fluoride units and units derived from one or more other monomers chosen from vinyl fluoride; trifluoroethylene; chlorotrifluoroethylene; 1,2-difluoroethylene, tetrafluoroethylene; hexafluoropropylene; perfluoro(alkyl vinyl)ethers; perfluoro(1,3-dioxole); perfluoro(2,2-dimethyl-1,3-dioxole); the product of formula CF₂=CFOCF₂CF(CF₃)OCF₂CF₂X in which X is SO₂F, CO₂H, CH₂OH, CH₂OCN or CH₂oPO₃H- the product of formula CF₂=CFOCF₂CF₂SO₂F; the product of formula F(CF₂)ₙCH₂OCF=CF₂ in which n is 1, 2, 3, 4 or 5; the product of formula R'CH₂OCF=CF₂ in which R' is hydrogen or F(CF₂)_{z} and z is 1, 2, 3 or 4; the product of formula R"OCF=CH₂ in which R" is F(CF₂)_{z} and z is 1, 2, 3 or 4; perfluorobutylethylene; 3,3,3-trifluoropropene; and 2-trifluoromethyl-3,3,3-trifluoro-1-propene; preferably the fluoropolymer A and/or the fluoropolymer B is a polyvinylidene fluoride homopolymer.

According to some embodiments, the solvent A and the solvent C are the same solvent.

According to some embodiments, the solvent A and/or the solvent C is individually chosen among polar aprotic solvents, preferably the solvent A and/or the solvent C is individually chosen among dimethyl sulfoxide, N-methyl-2-pyrrolidone, dimethylformamide, N, N-dimethylacetamide, or a combination thereof, even more preferably the solvent A and/or the solvent C is N, N-dimethylacetamide.

According to some embodiments, the second solution comprises a co-solvent D.

According to some embodiments, the co-solvent B and the co-solvent D are the same co-solvent.

According to some embodiments, the co-solvent B and/or the co-solvent D is individually chosen among a polar aprotic solvent having a total solubility parameter from 15 to 27 MPa^{1/2}, preferably chosen among tetrahydrofuran, acetone, triethyl phosphate, gamma-Butyrolactone, or a combination thereof, even more preferably the co-solvent B and/or the co-solvent D is tetrahydrofuran or a combination of tetrahydrofuran with one or more polar aprotic solvents.

According to some embodiments, the at least one pore-forming agent is an organic pore-forming-agent preferably chosen among polyvinylpyrrolidone, polyethylene glycol, methyl cellulose, carboxy methyl cellulose, polyvinyl alcohol, polyacrylic acid, polyacrylate, or a combination thereof, and even preferably chosen among polyethylene glycol, polyvinylpyrrolidone or a combination thereof.

According to some embodiments, the at least one pore-forming agent in the second solution is from 0.1 to 6% by weight, preferably from 0.5 to 5% by weight, even more preferably from 1 to 3% by weight.

According to some embodiments, at least one inorganic salt is added at the contacting step to form the second solution, preferably the at least one inorganic salt is chosen among lithium chloride, lithium bromide, sodium chloride, potassium chloride, or a combination thereof, and even more preferably the at least one inorganic salt is lithium chloride.

The invention also refers to a porous membrane obtainable by the method described above.

The invention also relates to the use of the porous membrane described above for water treatment.

The present invention makes it possible to address the need mentioned above.

The method relies on the preparation of a first solution and a second solution to form a highly selective and denser upper layer and a highly permeable bottom layer, respectively.

The method relies on the preparation of a first and/or a second solution to control the pore size, the pore shape and the pore connectivity of the upper and/or bottom layer of the porous membrane.

The method affords the preparation of porous membranes exhibiting high permeability (exceeding 1.5 LMH.bar⁻¹) and high selectivity (rejection of targeted pollutants higher than 80% and a molecular weight cut-off low than < 3000 Da).

### Brief description of the drawings

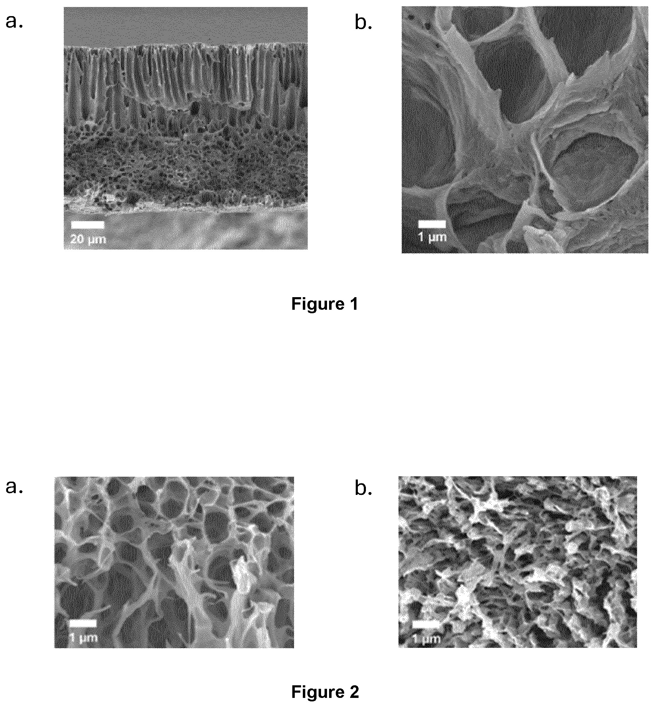

Figure 1 is an image obtained by Scanning Electron Microscopy of : a. the cross-section of a comparative PVDF porous membrane prepared without any organic pore-forming agent or other additive (sample B), b. at higher magnification.
Figure 2 shows Scanning Electron Microscopy images of the cross-section of: a. a bottom layer of a PVDF porous membrane wherein the pores were formed by 5% by weight of polyvinylpyrrolidone (Mw = 40000 g.mol⁻¹) and water as non-solvent (sample X1), b. a bottom layer of a PVDF porous membrane wherein the pores were formed by 5% by weight of polyethyleneglycol (Mw = 20000 g.mol⁻¹) and water as non-solvent (sample X2).

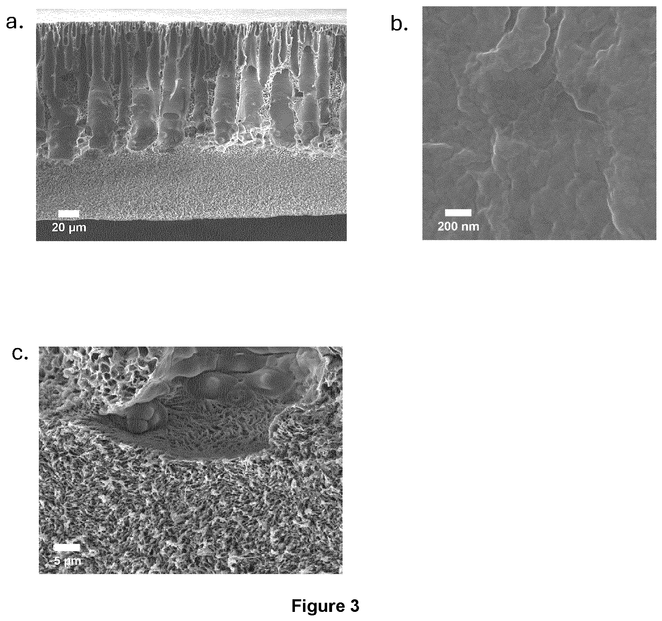

Figure 3 shows Scanning Electron Microscopy images of a PVDF porous membrane according to the invention (sample X3) prepared with an inorganic salt (1% by weight of LiCl) in the first and the second solutions: a. cross-section, b. surface of the upper layer, c. interface between the upper layer and the bottom layer.

### Detailed description

The invention will now be described in more detail without limitation in the following description.

### Method

The invention relates to a method of making a porous membrane, comprising:
- providing:
   - a first solution comprising at least one fluoropolymer A, a solvent A and a co-solvent B;
   - a second solution comprising at least one fluoropolymer B, at least one pore-forming agent, a solvent C, and a non-solvent A;
- co-casting the first and the second solutions onto a substrate to form a dual-layer film, wherein the first solution forms an upper layer of the film and the second solution forms a bottom layer of the film;
- immersing the film in a bath of a non-solvent B to form the porous membrane.

The presence of a non-solvent A in the second solution may induce the crystallization of the at least one fluoropolymer B.

According to some embodiments, the mass concentration of the at least one fluoropolymer A in the first solution is higher than the mass concentration of the at least one fluoropolymer B in the second solution.

A higher mass concentration of the at least one fluoropolymer A in the first solution than the mass concentration of the at least one fluoropolymer B in the second solution may result in a porous membrane with an upper layer that is denser than the bottom layer.

According to some embodiments, the mass concentration of the at least one fluoropolymer A in the first solution is from 5 to 40% by weight, preferably from 10 to 30% by weight, even more preferably from 15 to 22% by weight.

According to some embodiments, the mass concentration of the at least one fluoropolymer B in the second solution is from 4 to 39% by weight, preferably from 9 to 29% by weight, even more preferably from 14 to 21% by weight.

The difference between the mass concentration of the at least one fluoropolymer B in the second solution and the mass concentration of the at least one fluoropolymer A in the first solution may be for example from 0.5 to 5%, preferably from 1 to 3%, for example approximately 2%.

According to some embodiments, the at least one fluoropolymer A and the at least one fluoropolymer B are the same fluoropolymer.

According to some embodiments, the at least one fluoropolymer A and the at least one fluoropolymer B are individually selected from a polyvinylidene fluoride homopolymer or a polyvinylidene fluoride copolymer comprising vinylidene fluoride units and units derived from one or more other monomers chosen from vinyl fluoride (VF); trifluoroethylene (TrFE); chlorotrifluoroethylene (CTFE); 1,2-difluoroethylene (DFE); tetrafluoroethylene (TFE); hexafluoropropylene (HFP); perfluoro(alkyl vinyl)ethers (PFAVEs); perfluoro(1,3-dioxole); perfluoro(2,2-dimethyl-1,3-dioxole); the product of formula CF₂=CFOCF₂CF(CF₃)OCF₂CF₂X in which X is SO₂F, CO₂H, CH₂OH, CH₂OCN or CH₂OPO₃H; the product of formula CF₂=CFOCF₂CF₂SO₂F; the product of formula F(CF₂)ₙCH₂OCF=CF₂ in which n is 1, 2, 3, 4 or 5; the product of formula R'CH₂OCF=CF₂ in which R' is hydrogen or F(CF₂)_{z} and z is 1, 2, 3 or 4; the product of formula R"OCF=CH₂ in which R" is F(CF₂)_{z} and z is 1, 2, 3 or 4; perfluorobutylethylene; 3,3,3-trifluoropropene; and 2-trifluoromethyl-3,3,3-trifluoro-1-propene; preferably the fluoropolymer A and/or the fluoropolymer B is a polyvinylidene fluoride homopolymer.

According to some embodiments, the melt viscosity of the fluoropolymer A solution and/or the fluoropolymer B solution is from 1000 to 100000 Pa.s, preferably from 2000 to 75000 Pa.s, more preferably from 3000 to 50000 Pa.s and, even more preferably from 4000 to 40000 Pa.s. The viscosity of the fluoropolymer is measured at 230°C and 100 s⁻¹ according to standard ASTM D3835.

According to some embodiments, the melting temperature of the fluoropolymer A and/or the fluoropolymer B is from 80 to 220°C, preferably from 100 to 200°C, and more preferably from 120 to 170 °C. The melting temperature of the fluoropolymer is measured at 10°C/min according to standard ISO 11357-1/-3.

According to some embodiments, the fluoropolymer A and/or the fluoropolymer B is a polyvinylidene fluoride copolymer which is a statistical copolymer, an alternating copolymer or a block copolymer.

The composition of the copolymer can be determined for example based on ¹⁹F NMR spectroscopy and ¹H-NMR spectroscopy.

According to some embodiments, the fluoropolymer A and/or the fluoropolymer B is a polyvinylidene fluoride copolymer which comprises from 1 to 99 mol.%, preferably from 20 to 99 mol.% and even more preferably from 50 to 99 mol.% of the vinylidene fluoride units.

According to some embodiments, the fluoropolymer A and/or the fluoropolymer B is a polyvinylidene fluoride copolymer chosen among Poly(VDF-co-VF), Poly(VDF-co-TFE), Poly(VDF-co-CTFE), Poly(VDF-co-DFE), Poly(VDF-co-TrFE), Poly(VDF-co-HFP), or Poly(VDF-co-PFAVE).

According to some embodiments, the fluoropolymer A and/or the fluoropolymer B may be a polyvinylidene fluoride copolymer comprising vinylidene fluoride units (VDF) and units derived from one or more other non-fluorinated monomers preferably chosen among acrylonitrile (AN), hydroxyethyl methacrylate (HEMA), butyl methacrylate (BMA), ethyl methacrylate (EMA), methyl methacrylate (MMA), vinyl acetate (VA), 2-hydroxypropyl methacrylate (HPMA), trimethylolpropane triacrylate (TMPTA), or styrene (S).

According to some embodiments, the fluoropolymer A and/or the fluoropolymer B is a polyvinylidene fluoride copolymer which comprises:
- from 1 to 99 mol.%, preferably from 20 to 99 mol.% and even more preferably from 50 to 99 mol.% of the vinylidene fluoride units;
- from 1 to 99 mol.%, preferably from 1 to 80 mol.% and even more preferably from 1 to 50 mol.% of the units derived from the non-fluorinated monomers.

According to some embodiments, said polyvinylidene fluoride copolymer may be chosen among Poly(VDF-*co*-AN), Poly(VDF-*co*-HEMA), Poly(VDF-*co-*BMA), Poly(VDF-*co*-EMA), Poly(VDF-*co*-MMA), Poly(VDF-*co*-VA), Poly(VDF-*co-*HPMA), Poly(VDF-*co*-TMPTA), or Poly(VDF-*co*-PS).

Alternatively, the fluoropolymer A and/or the fluoropolymer B may be a polyvinylidene fluoride copolymer which comprises VDF units, one or more units derived from fluorinated monomers other than VDF, and one or more units derived from non-fluorinated monomers as described above.

According to some embodiments, the fluoropolymer A and/or the fluoropolymer B may be functionalized by molecules containing carboxylic acid groups including but not limited to methacrylic acid, maleic acid, fumaric acid, cinnamic acid, itaconic acid, crotonic acid, or acrylic acid.

In a preferred embodiment, the fluoropolymer A and/or the fluoropolymer B is a polyvinylidene fluoride homopolymer or Poly(VDF-*co-*HFP) functionalized by one or more molecules containing a carboxylic acid group. Preferably the molecule containing a carboxylic acid group is acrylic acid.

According to some embodiments, the mass concentration of the solvent A in the second solution is from 58 to 93% by weight, preferably from 60 to 88% by weight, even more preferably from 62 to 83% by weight.

According to some embodiments, the mass concentration of the solvent C in the second solution is from 7.9 to 79% by weight, preferably from 16 to 76% by weight, even more preferably from 30 to 72% by weight based on the total weight.

According to some embodiments, the solvent A and the solvent C are the same solvent.

According to some embodiments, the solvent A and/or the solvent C is individually chosen among polar aprotic solvents.

By *"polar"* is meant a molecule that has a dipole moment equal to or higher than 1.5 D at 25°C, and preferably equal to or higher than 3 D, or 4 D, or 4.5 D, or 5 D at 25°C. The dipole moment can be measured by using a dipole meter and by interpretation of the results using the Debey equation.

By *"aprotic"* is meant a molecule which does not contain any acidic hydrogen and thus does not act as a hydrogen bond donor. In particular, the aprotic molecule is free of -OH, -NH, -SH, and -PH groups.

Preferably, the solvent A and/or the solvent C is individually chosen among dimethyl sulfoxide, N-methyl-2-pyrrolidone, dimethylformamide, N, N-dimethylacetamide, or a combination thereof, even more preferably the solvent A and/or the solvent C is N, N-dimethylacetamide.

According to some embodiments, the mass concentration of the co-solvent B in the first solution is from 2 to 15% by weight, preferably from 3 to 12% by weight, even more preferably from 4 to 8% by weight.

According to some embodiments, the second solution comprises a co-solvent D.

According to some embodiments, the mass concentration of the co-solvent D in the second solution comprises from 2 to 15% by weight, preferably from 3 to 12% by weight, even more preferably from 4 to 8% by weight.

According to some embodiments, the co-solvent B and the co-solvent D are the same co-solvent.

According to some embodiments, the co-solvent B and/or the co-solvent D is individually chosen among a polar aprotic solvent having a total solubility parameter from 15 to 27 MPa^{1/2}, or having a vapor pressure higher than 10 kPa at 25 °C. preferably chosen among tetrahydrofuran, acetone, triethyl phosphate, gamma-Butyrolactone, or a combination thereof, even more preferably the co-solvent B and/or the co-solvent D is tetrahydrofuran or a combination of tetrahydrofuran with one or more polar aprotic solvents.

The total solubility parameters of tetrahydrofuran, acetone, triethyl phosphate and gamma-butyrolactone are 19.4 MPa^{1/2}, 20 MPa^{1/2}, 22.3 MPa^{1/2} and 26.3 MPa^{1/2}, respectively.

The vapor pressure of tetrahydrofuran, acetone, methyl ethyl ketone are 17.2, 30 and 10 kPa respectively.

Total solubility parameters are based on the article *Solubility Parameters of Poly(vinylidene fluoride),* Bottino et al., Journal of Polymer Science: Part B: Polymer Physics, Vol. 26,785-794 (1988).

According to some embodiments, the at least one pore-forming agent is an organic pore-forming-agent preferably chosen among polyvinylpyrrolidone, polyethylene glycol, methyl cellulose, carboxy methyl cellulose, polyvinyl alcohol, polyacrylic acid, polyacrylate, or a combination thereof, and even preferably chosen among polyethylene glycol, polyvinylpyrrolidone or a combination thereof.

The pore-forming agent may be removed from the porous membrane when the porous membrane is immersed in a non-solvent bath, as described in more detail below.

According to some embodiments, the mass concentration of the at least one pore-forming agent in the second solution is from 0.1 to 7% by weight, preferably from 0.5 to 6;5% by weight, even more preferably from 1 to 6% by weight. This mass concentration may range from 0.1 to 0.5% by weight, or from 0.5 to 1% by weight, or from 1 to 1.5% by weight, or from 1.5 to 2% by weight, or from 2.5 to 3% by weight, or from 3 to 3.5% by weight, or from 3.5 to 4% by weight, or from 4 to 4.5% by weight, or from 4.5 to 5% by weight, or from 5 to 5.5% by weight, or from 5.5 to 6% by weight, or from 6 to 6.5% by weight, or from 6.5 to 7% by weight.

Preferably, the polyvinylpyrrolidone has a weight average molar mass from 10000 to 70000 g.mol⁻¹, preferably from 15000 to 65000 g.mol⁻¹, more preferably from 20000 to 60000 g.mol⁻¹ and even more preferably from 25000 to 55000 g.mol⁻¹. The weight average molar mass may be determined by size-exclusion chromatography (SEC) or nuclear magnetic resonance (NMR) spectroscopy.

The polyvinylpyrrolidone may reduce the crystallization temperature of the fluoropolymer B, for example the polyvinylidene fluoride, and therefore may enhance liquid-liquid de-mixing of the second solution. The obtained porous membrane may have a bottom layer with tiny and connected pores, as described in more detail below.

Preferably, the polyethylene glycol has a weight average molar mass from 7500 to 50000 g.mol⁻¹, preferably from 10000 to 40000 g.mol⁻¹, more preferably from 10000 to 35000 g.mol⁻¹ and even more preferably from 12500 to 30000 g.mol⁻¹. The weight average molar mass may be determined by size-exclusion chromatography (SEC) or nuclear magnetic resonance (NMR) spectroscopy.

The polyethylene glycol may enhance solid-liquid de-mixing by reducing the thermodynamic stability of the second solution.

The crystallization of the fluoropolymer B may induce gelation of the second solution. The obtained porous membrane may have a nodulous and bi-continuous bottom layer, as described in more detail below.

Preferably, a high weight average molar mass of the organic pore forming agent (for example polyvinylpyrrolidone or polyethylene glycol) may prevent its diffusion from the bottom layer to the top layer when the dual-layer film is cast, as described in detail below.

According to some embodiments, the mass concentration of the non-solvent A in the second solution comprises from 2 to 15% by weight, preferably from 3 to 12% by weight, and even more preferably from 4 to 8% by weight.

Non-solvents A and B may be the same.

According to some embodiments, the non-solvent A is water.

According to some embodiments, the non-solvent B is water.

According to some embodiments, the first solution does not comprise a non-solvent.

**The** non-solvent A may induce the crystallization of the at least one fluoropolymer B in the second solution.

The non-solvent B may induce the crystallization of the at least one fluoropolymer A and/or the at least one fluoropolymer B in the porous membrane.

According to some embodiments, the temperature of the contacting step to form the first solution is from 40 to 140°C, preferably from 60 to 130°C, even more preferably from 80 to 120°C.

According to some embodiments, the temperature of the contacting step to form the second solution is from 40 to 140°C, preferably from 60 to 130°C, even more preferably from 80 to 120°C.

According to some embodiments, at least one inorganic salt is added at the contacting step to form the second solution, preferably the at least one inorganic salt is chosen among lithium chloride, lithium bromide, sodium chloride, potassium chloride, or a combination thereof, and even more preferably the at least one inorganic salt is lithium chloride.

According to some embodiments, at least one inorganic salt is added at the contacting step to form the first solution, preferably the at least one inorganic salt is chosen among lithium chloride, lithium bromide, sodium chloride, potassium chloride, or a combination thereof, and even more preferably the at least one inorganic salt is lithium chloride.

According to some embodiments, the mass concentration of the inorganic salt in the first solution is from 0.1 to 6% by weight, preferably from 0.5 to 5% by weight, even more preferably from 1 to 3% by weight.

The pore-forming agent may be leached from the porous membrane when the porous membrane is immersed in a non-solvent bath, as described in more detail below.

The at least one inorganic salt in the first and/or second solution, for example lithium chloride, may enhance the permeability of the obtained porous membrane.

According to some embodiments, the first solution does not comprise a pore-forming agent.

According to some embodiments, the contacting step to form the first solution is performed under stirring.

According to some embodiments, the contacting step to form the second solution is performed under stirring.

According to some embodiments, the first solution is degassed prior to casting.

According to some embodiments, the second solution is degassed prior to casting.

According to some embodiments, the solutions are degassed at a temperature from 40 to 120°C, preferably from 40 to 100°C, even more preferably from 50 to 90°C.

The solutions may be degassed from 0.5 to 24h or from 0.5 to 12h, preferably from 1 to 8h, and more preferably from 2 to 6h.

According to some embodiments, the temperature of the solutions in the co-casting step is from 20 to 120°C, preferably from 20 to 90°C, more preferably from 20 to 70°C, and even more preferably from 25 to 50°C.

According to some embodiments, the substrate on which the solutions are cast is a metal, e.g. aluminum, or glass plate, preferably a glass plate. According to some embodiments, the dual-layer film has a thickness from 150 to 1100 µm, preferably from 250 to 900 µm, and even more preferably from 300 to 700 µm at the casting step.

According to some embodiments, the upper layer has a thickness from 50 to 500 µm, preferably from 100 to 400 µm, and even more preferably from 100 to 300 µm at the co-casting step.

According to some embodiments, the bottom layer has a thickness from 100 to 600 µm, preferably from 150 to 500 µm, and even more preferably from 200 to 400 µm at the co-casting step.

According to some embodiments, the temperature of the bath in the immersing step is from 0 to 45°C, preferably from 10 to 40°C, even more preferably from 15 to 35°C. In other embodiments, the temperature of the non-solvent bath is from -5 to 15°C, preferably from -2 to 10°C.

According to some embodiments, the immersion time of the film is from 5 to 24 hours, preferably from 8 to 20 hours, more preferably from 10 to 18 hours.

According to some embodiments, the porous membrane may be dried in ambient or heated air. The air may be heated at a temperature from 30 to 100°C, preferably from 35 to 80°C, more preferably from 40 to 70°C.

According to some embodiments, the obtained porous membrane comprises less than 2% by weight, preferably less than 1% by weight, more preferably less than 0.5% by weight, and even more preferably approximately 0% by weight of the total of the solvents and the co-solvents, based on the total weight of the porous membrane.

According to a preferred embodiment, the method of making a porous membrane, comprises:
- providing:
   - a first solution comprising at least one fluoropolymer A, **N, N-**dimethylacetamide and tetrahydrofuran, optionally degassed;
   - a second solution comprising at least one fluoropolymer B, at least one pore-forming agent, preferably polyvinylpyrrolidone or polyethylene glycol, N, N-dimethylacetamide, and water, optionally degassed;
- co-casting the first and the second solutions onto a substrate to form a dual-layer film, wherein the first solution forms an upper layer of the film and the second solution forms a bottom layer of the film;
- immersing the film in a bath of a non-solvent B, preferably water, to form the porous membrane;
- optionally drying the porous membrane.

### Porous membrane

The invention also relates to a porous membrane obtainable by the method described above.

According to some embodiments, the porous membrane comprises or consists of an upper layer and a bottom layer.

According to some embodiments, the porous membrane has a total thickness from 70 to 300 µm, preferably from 80 to 250 µm. The thickness may be evaluated, for example, using scanning electron microscopy (SEM) or thickness gauge.

According to some embodiments, the upper layer of the porous membrane has a thickness from 30 to 150 µm, preferably from 40 to 125 µm. The thickness may be evaluated, for example, using scanning electron microscopy (SEM).

According to some embodiments, the bottom layer of the porous membrane has a thickness from 30 to 150 µm, preferably from 40 to 125 µm. The thickness may be evaluated, for example, using scanning electron microscopy (SEM).

Preferably, the upper layer of the porous membrane has a pore size ranging from 1 to 10 nm, more preferably from 2 to 9 nm, and even more preferably from 3 to 8 nm. The pore size may be determined by the equivalent polyethylene glycol hydrodynamic volume corresponding to the molecular weight cut-off as explained in more details below.

Preferably, the bottom layer of the porous membrane has a pore size ranging from 1 to 10 nm, more preferably from 2 to 9 nm, and even more preferably from 3 to 8 nm. The pore size may be determined by the equivalent polyethylene glycol hydrodynamic volume corresponding to the molecular weight cut-off as explained in more details below.

According to some embodiments, the porous membrane comprises an upper layer having elongated unidirectional pores running partially or entirely through the thickness of the upper layer. The presence and shape of the pores may be determined by scanning electron microscopy.

Unidirectional pores may be anisotropic and may correspond to channel-like pores. Unidirectional pores may be formed during phase separation due to the non-solvent intrusion.

Preferably, the pores of the bottom layer of the porous membrane are interconnected.

Interconnected pores may be a network of connected pores. These pores may be physically linked to allow the pathway of a fluid (e.g. water). These pores may be connected by interconnections (e.g. throats, channels, bridges).

According to some embodiments, interconnected pores may form a continuous three-dimensional network, such as a sponge-like architecture.

According to some embodiments, interconnected pores may comprise pores linked by openings.

According to some embodiments, the porous membrane has a water permeance of 1.25 LMH.bar⁻¹ or more, preferably 3 LMH.bar⁻¹ or more, more preferably 4.5 LMH.bar⁻¹ or more, and even more preferably 6 LMH.bar⁻¹ or more. Water permeance may be determined with the following method: pure water at temperature of 25°C is filtered through an effective membrane area (A) (in m²) of the porous membrane under a pressure (P) of about 1 to 4 bar pressure. The volume of water (in liters) is recorded every two minutes (with pressure stabilization every two minutes). The permeance (P) is calculated according to the following formula : $P = \frac{60 V}{2 P}$

According to some embodiments, the porous membrane has a rose Bengal dye rejection from 80 to 100%, preferably from 83 to 100%, more preferably from 86 to 100%, even more preferably from 88 to 100%. Rose Bengal dye rejection may be determined with the following method: an aqueous solution of rose Bengal dye having an initial concentration of dye (C₀) is filtered through the porous membrane. The resulting aqueous solution has a rose Bengal concentration after filtration (C_{f}) determined by UV-visible spectroscopy. The dye rejection (R) is calculated according to the following formula : $R = \frac{{C}_{0} - {C}_{f}}{{C}_{0}}$

According to some embodiments, the porous membrane has a methyl orange dye rejection from 80 to 100%, preferably from 83 to 100%, more preferably from 86 to 100%, even more preferably from 88 to 100%. Methyl orange dye rejection may be determined with the following method: an aqueous solution of methyl orange dye having an initial concentration of dye (C₀) is filtered through the porous membrane. The resulting aqueous solution has a rose Bengal concentration after filtration (C_{f}) determined by UV-visible spectroscopy. The dye rejection (R) is calculated according to the following formula : $R = \frac{{C}_{0} - {C}_{f}}{{C}_{0}}$

According to some embodiments, the porous membrane has a molecular weight cut-off of 3000 Da or less, preferably 2500 Da or less, more preferably 2000 Da or less, and even more preferably 1600 Da or less. The molecular weight cut-off (MWCO) may be determined with the following method: a series of PEG standards with known molecular weights are filtered through the membrane. The MWCO is identified as the lowest PEG molecular weight (in Da) at which the membrane retains approximately 90% of the PEG in the feed filtered through the membrane (as determined by Gel Permeation Chromatography). Use

The invention also relates to the use of the porous membrane described above for water treatment.

The water to be treated may be groundwater; surface water such as rivers, lakes and reservoirs; brackish water; wastewater such as municipal or industrial wastewater; desalinated seawater; rainwater; contaminated water such as agricultural runoff; industrial process water.

Water treatment may include (but without being limited to) the removal of organic contaminants such as antibiotics, humic substances, pesticides, micropollutants or volatile organic compounds, the removal of microorganisms such as bacteria, viruses or protozoa.

### Examples

The following example illustrates the invention without limiting it. In all of the examples below, PVDF is a fluorinated homopolymer sold under the trademark Kynar^{®}761A (as powder) provided by Arkema France; PVP is polyvinylpyrrolidone having a weight average molar mass of 40000 g.mol⁻¹; PEG is polyethylene glycol having a weight average molar mass of 20000 g.mol⁻¹.

### Example 1: Preparation of comparative porous membranes

Several solutions (A to D) were prepared by dissolving PVDF and dimethyl sulfoxide (DMSO) under stirring at 100°C for 5 to 8 hours (Table 1). The solutions (A to D) were degassed at a temperature from 50 to 80°C overnight. The content of each component in Table 1 is expressed as percentage by weight.

**Table 1**

| Samples | A | B | C | D |
|---|---|---|---|---|
| PVDF | 20 | 20 | 18 | 22 |
| DMAc | 80 | 75 | 77 | 73 |
| THF | - | 5 | 5 | 5 |

The solutions (A to D) at a temperature of about 40°C were cast on plates using a casting blade to form a film. The thickness of the film was about 500 µm. The plates were then individually immersed in a water bath for 12 hours to form the porous membranes. The water in each bath was changed twice, with a 60-minute interval between the changes.

### Example 2: Preparation of dual-layer porous membranes

### First solution

Several solutions (E to M) corresponding to the first solution of the invention were prepared by dissolving PVDF and optionally an inorganic salt (LiCl) into dimethylacetamide (DMAc) and tetrahydrofuran (THF) under stirring at 100°C for 5 to 8 hours (Table 2). The solutions (E to H) were degassed at 80°C overnight. The content of each component in Table 2 is expressed as percentage by weight.

**Table 2**

| Samples | E | F | G | H | I | J | K | L | M |
|---|---|---|---|---|---|---|---|---|---|
| PVDF | 20 | 20 | 20 | 20 | 20 | 20 | 20 | 20 | 20 |
| DMAc | 75 | 75 | 75 | 75 | 74 | 72 | 75 | 75 | 75 |
| THF | 5 | 5 | 5 | 5 | 5 | 5 | 5 | 5 | 5 |
| LiCl | - | - | - | - | 1 | 3 | - | - | - |

### Second solution

Several solutions (N to R) corresponding to the second solution of the invention and several solutions (S to U) corresponding to a comparative second solution were prepared by dissolving PVDF, an organic pore forming agent (PVP or PEG) and optionally an inorganic salt (LiCl) into dimethylacetamide (DMAc), tetrahydrofuran (THF) and optionally water under stirring at 100°C for 5 to 8 hours (Table 3). The solutions (I to L) were degassed at a temperature from 50 to 80°C overnight. The content of each component in Table 3 is expressed as percentage by weight.

**Table 3**

| Samples | N | O | P | Q | R | S | T | U | V |
|---|---|---|---|---|---|---|---|---|---|
| PVDF | 18 | 18 | 18 | 18 | 18 | 18 | 18 | 18 | 16 |
| DMAc | 67 | 67 | 66 | 64 | 67 | 67 | 64 | 72 | 79 |
| THF | 5 | 5 | 5 | 5 | 5 | 5 | 5 | 5 | 5 |
| H₂O | 5 | 5 | 5 | 5 | 5 | 5 | - | - | - |
| PVP | 5 | - | - | - | 5 | - | 5 | - | - |
| PEG | - | 5 | 5 | 5 | - | 5 | - | 5 | - |
| LiCl | - | - | 1 | 3 | - | - | - | - | - |

### Membranes

The first solutions (E to M) and the second solutions (N to U) at a temperature of about 30°C were individually cast on plates using a double blade casting knife to form a dual-layer film (X1 to X9) (Table 4). The thickness of the dual-layer film was about 500 µm. The thickness of the upper layer was about 200 µm while the thickness of the bottom layer was about 300 µm. The plates were then individually immersed in a water bath at ambient temperature (T = 25°C) for 5 seconds to form the porous membranes. The water in each bath was changed twice with a 60-minute interval between the changes.

**Table 4**

| Samples | X1 (inv) | X2 (inv) | X3 (inv) | X4 (inv) | X5 (inv) | X6 (inv) | X7 (comp) | X8 (comp) | X9 (comp) |
|---|---|---|---|---|---|---|---|---|---|
| First solution (upper layer) | E | F | G | H | I | J | K | L | M |
| Second solution (bottom layer) | N | O | P | Q | R | S | T | U | V |

### Example 3: Characterization of the membranes

The membranes described above were tested according to the following methods as described above: water permeance, rose Bengal dye rejection, methyl orange dye rejection, molecular weight cut-off (MWCO).

**Table 5**

| Samples | A (comp) | B (comp) | C (comp) | D (comp) |
|---|---|---|---|---|
| Permeance (LMH.bar⁻¹) | 0.9 | 1 | 2.8 | 0.5 |
| Rose Bengal rejection (%) | 100 | 100 | 90 | 100 |
| Methyl orange rejection (%) | 81 | 86 | 70 | 89 |
| MWCO (Da) | 3990 | < 1600 | < 10000 | < 1600 |

**Table 6**

| Samples | X1 (inv) | X2 (inv) | X3 (inv) | X4 (inv) | X4 (inv) | X5 (inv) | X6 (comp) | X7 (comp) | X8 (comp) |
|---|---|---|---|---|---|---|---|---|---|
| Permeance (LMH.bar⁻¹) | 1.5 | 3.8 | 6.7 | 6.4 | 10.2 | 12.5 | 1.3 | 1.8 | 0.9 |
| Rose Bengal rejection (%) | 100 | 100 | 100 | 100 | 98 | 92 | 100 | 100 | 92 |
| Methyl orange rejection (%) | 83 | 88 | 88 | 88 | 70 | 63 | 88 | 90 | 63 |
| MWCO (Da) | < 1600 | < 1600 | < 1600 | < 1600 | < 3000 | < 4500 | < 1600 | < 1600 | < 4000 |

The comparative porous membranes A, B, D, X6 and X8 have a dye rejection higher than 80% but these samples have a water permeance lower than 1.5 LMHB. Moreover, the comparative sample A has a Molecular Weight Cut-Off (MWCO) higher than 3000 Da. Therefore, the reference samples A, B and D have a lack of permeability. On the other hand, the comparative porous membrane C has a water permeance higher than 1.5 LMHB but its dye rejection is less than 80%. Therefore, the comparative sample C has a lack of selectivity.

The porous membranes according to the invention (X1 to X5) have a water permeability higher than 1.5 LMHB, a MWCO greater than 3000 Da and a dye rejection above 80%. In other words, the porous membranes according to the invention have both high permeability and good selectivity.

Furthermore, the porous membrane X7 exhibits a dye rejection higher than 80% and a water permeance higher than 1.5 LMHB. However, its performance can be compared to sample X2 according to the invention, using the closest preparation method. X2 has a greater water permeance.

Comparative porous membranes (A to D and X6 to X8) exhibit lower performance compared to the porous membranes according to the invention (X1 to X5).

### Example 4: SEM observation of different porous membrane samples

Figure 1.a shows a comparative PVDF porous membrane prepared without any organic pore-forming agent or other additive (sample B). Figure 1.b shows the comparative PVDF porous membrane (sample B) exhibited on Figure 1.a at higher magnification. The pores are large and are not connected to each other.

Figure 2.a shows the bottom layer of a PVDF porous membrane (sample X1) wherein the pores were formed by using a solution (sample N) containing 5% by weight of polyvinylpyrrolidone (Mw = 40000 g.mol⁻¹) and water as non-solvent. Adding a non-solvent and, more specifically, water in the second solution helps to prepare porous membranes with more interconnected pores.

Figure 2.b shows the bottom layer of a PVDF porous membrane (sample X2) wherein the pores were formed by using a solution (sample O) containing 5% by weight of polyethylene glycol (Mw = 20000 g.mol⁻¹) and water as non-solvent. Adding a non-solvent and, more specifically, water in the second solution helps to prepare porous membranes with more interconnected pores.

Figure 3.a shows the cross-section of a PVDF porous membrane according to the invention (sample X3) prepared with an inorganic salt (1% by weight of LiCl) in the first (sample G) and the second (sample P) solutions. The elongated pores in the top layer are particularly long, some running the entire thickness of the upper layer.

The surface of the upper layer (Figure 3.a) have no defects.

Figures 3.b shows the bottom layer and the interface of the bottom layer and the upper layer of the PVDF porous membrane (Figure 3.a) at higher magnification. The inorganic salt and, more specifically LiCl, helps to prepare porous membranes with more interconnected pores.

## Claims

1. A method of making a porous membrane, comprising :
- providing:
• a first solution comprising at least one fluoropolymer A, a solvent A and a co-solvent B;
• a second solution comprising at least one fluoropolymer **B,** at least one pore-forming agent, a solvent C, and a non-solvent A;
- co-casting the first and the second solutions onto a substrate to form a dual-layer film, wherein the first solution forms an upper layer of the film and the second solution forms a bottom layer of the film;
- immersing the film in a bath of a non-solvent B to form the porous membrane.

2. A method according to claim 1, wherein the mass concentration of the at least one polymer A in the first solution is higher than the mass concentration of the at least one polymer B in the second solution.

3. A method according to any one of claims 1 and 2, wherein the mass concentration of the at least one fluoropolymer A in the first solution is from 5 to 40% by weight, preferably from 10 to 30% by weight, even more preferably from 15 to 22% by weight.

4. A method according to any one of claims 1 to 3, wherein the mass concentration of the at least one fluoropolymer B in the second solution is from 4 to 39% by weight, preferably from 9 to 29% by weight, even more preferably from 14 to 21% by weight.

5. A method according to any one of claims 1 to 4, wherein the at least one fluoropolymer A and the at least one fluoropolymer B are the same fluoropolymer.

6. A method according to any one of claims 1 to 5, wherein the at least one fluoropolymer A and the at least one fluoropolymer B are individually selected from a polyvinylidene fluoride homopolymer or a polyvinylidene fluoride copolymer comprising vinylidene fluoride units and units derived from one or more other monomers chosen from vinyl fluoride; trifluoroethylene; chlorotrifluoroethylene; 1,2-difluoroethylene, tetrafluoroethylene; hexafluoropropylene; perfluoro(alkyl vinyl)ethers; perfluoro(1,3-dioxole); perfluoro(2,2-dimethyl-1,3-dioxole); the product of formula CF₂=CFOCF₂CF(CF₃)OCF₂CF₂X in which X is SO₂F, CO₂H, CH₂OH, CH₂OCN or CH₂OPO₃H; the product of formula CF₂=CFOCF₂CF₂SO₂F; the product of formula F(CF₂)ₙCH₂OCF=CF₂ in which n is 1, 2, 3, 4 or 5; the product of formula R'CH₂OCF=CF₂ in which R' is hydrogen or F(CF₂)_{z} and z is 1, 2, 3 or 4; the product of formula R"OCF=CH₂ in which R" is F(CF₂)_{z} and z is 1, 2, 3 or 4; perfluorobutylethylene; 3,3,3-trifluoropropene; and 2-trifluoromethyl-3,3,3-trifluoro-1-propene; preferably the fluoropolymer A and/or the fluoropolymer B is a polyvinylidene fluoride homopolymer.

7. A method according to any one of claims 1 to 6, wherein the solvent A and the solvent C are the same solvent.

8. A method according to any one of claims 1 to 7, wherein the solvent A and/or the solvent C is individually chosen among polar aprotic solvents, preferably the solvent A and/or the solvent C is individually chosen among dimethyl sulfoxide, N-methyl-2-pyrrolidone, dimethylformamide, N, N-dimethylacetamide, or a combination thereof, even more preferably the solvent A and/or the solvent C is N, N-dimethylacetamide.

9. A method according to any one of claims 1 to 8, wherein the second solution comprises a co-solvent D, and wherein, optionally, the co-solvent B and the co-solvent D are the same co-solvent.

10. A method according to any one of claims 1 to 9, wherein the co-solvent B and/or the co-solvent D is individually chosen among a polar aprotic solvent having a total solubility parameter from 15 to 27 MPa^{1/2}, preferably chosen among tetrahydrofuran, acetone, triethyl phosphate, gamma-Butyrolactone, or a combination thereof, even more preferably the co-solvent B and/or the co-solvent D is tetrahydrofuran or a combination of tetrahydrofuran with one or more polar aprotic solvents.

11. A method according to any one of claims 1 to 10, wherein the at least one pore-forming agent is an organic pore-forming-agent preferably chosen among polyvinylpyrrolidone, polyethylene glycol, methyl cellulose, carboxy methyl cellulose, polyvinyl alcohol, polyacrylic acid, polyacrylate, or a combination thereof, and even preferably chosen among polyethylene glycol, polyvinylpyrrolidone or a combination thereof.

12. A method according to any one of claims 1 to 11, wherein the at least one pore-forming agent in the second solution is from 0.1 to 6% by weight, preferably from 0.5 to 5% by weight, even more preferably from 1 to 3% by weight.

13. A method according to any one of claims 1 to 12, wherein at least one inorganic salt is added at the contacting step to form the second solution, preferably the at least one inorganic salt is chosen among lithium chloride, lithium bromide, sodium chloride, potassium chloride, or a combination thereof, and even more preferably the at least one inorganic salt is lithium chloride.

14. A porous membrane obtainable by the method according to any one of claims 1 to 13.

15. Use of the porous membrane according to claim 14 for water treatment.
